# FASCICULE DE BREVET EUROPEEN

(11) **EP 4 408 736 B1**
(45) Date de publication et mention de la délivrance du brevet: **19.11.2025**
(21) Numéro de dépôt: 22758559.3
(22) Date de dépôt: 11.07.2022
(51) Int. Cl.: B64C 1/14

(54) **HUBLOT D'AERONEF ALLEGE A RIGIDITE EGALE**
FLUGZEUGFENSTER MIT REDUZIERTEM GEWICHT BEI GLEICHBLEIBENDER FESTIGKEIT
AIRCRAFT WINDOW WITH REDUCED WEIGHT AT UNVARYING RIGIDITY

(30) Priorité: 30.09.2021 FR 2110318
(43) Date de publication de la demande: 07.08.2024
(73) Titulaire: Saint-Gobain Sully, 45600 Sully-sur-Loire (FR)
(72) Inventeur: ROUBY, Michel, 45460 BRAY EN VAL (FR); DUFFOUR, Adrien, 45590 Saint-Cyr en Val (FR)
(74) Mandataire: Saint-Gobain Recherche
(86) Numéro de dépôt international: PCT/FR2022/051396
(87) Numéro de publication internationale: WO 2023/052690

(56) Documents cités:
- EP-A2- 0 869 057
- WO-A1-2021/037496
- FR-A1- 3 099 131
- US-A1- 2007 069 080

## Description

L'invention a trait aux vitrages d'aéronefs à voilures fixes (avions) ou tournantes (hélicoptères) ou fixes et tournantes. Cette appellation générique désigne des véhicules tels que commercialisé par la Société Bell-Boeing sous le nom V-22 Osprey, ou encore par la Société Agusta Westland sous le nom AW609. Sont plus particulièrement concernés les hublots de cabine généralement composés de deux dalles de poly(méthacrylate de méthyle) (PMMA) bi-étiré séparés par une lame d'air. Ces deux dalles sont maintenues grâce à un joint périphérique rapporté ou moulé autour du chant des deux dalles en maintenant un écart qui définit la lame d'air.

Les dalles des hublots d'avion sont dimensionnées par la résistance à la pression différentielle de la dalle extérieure (flèche et rupture). En ce qui concerne la dalle intérieure, elle n'est dimensionnée que par sa résistance mécanique en cas de rupture de la dalle extérieure. Cette résistance est liée au risque de déchaussement de la dalle du joint dans lequel elle est logée, par déformation ou par la résistance intrinsèque à la rupture du matériau la constituant (en règle générale PMMA bi-étiré réticulé).

L'état de l'art est illustré par les documents US 2007/0069080 A1, EP 0 869 057 A2, FR 3 099 131 A1 et WO 2021/037496 A1**.**

Les inventeurs ont eu pour objectif la mise à disposition d'une dalle intérieure et d'une dalle extérieure qui soient plus légères tout en maintenant leurs propriétés mécaniques requises. Les deux dalles peuvent être remplacées individuellement, indépendamment l'une de l'autre, ou au contraire conjointement. Les inventeurs ont imaginé remplacer une partie au moins du PMMA par du verre qui, à raideur équivalente, est plus mince mais aussi plus léger. Le gain de masse à raideur équivalente est plus important lorsque l'épaisseur de verre est plus importante.

Ainsi, la dalle intérieure en PMMA peut être avantageusement remplacée par une dalle en verre mince feuilletée.

Dans le même but, la dalle extérieure en PMMA peut être avantageusement remplacée par une feuille de PMMA extérieure amincie feuilletée à un verre intérieur, chacun(e) d'épaisseur sélectionnée.

Le résultat visé est maintenant obtenu au moyen de l'invention qui, en conséquence, a pour objet un hublot d'aéronef composé d'une dalle intérieure et d'une dalle extérieure séparées par une lame d'air au moyen d'un joint de montage dans lequel une partie périphérique du hublot est enchâssée, caractérisé en ce que la dalle intérieure est constituée d'une première feuille de verre extérieure et d'une seconde feuille de verre intérieure ayant chacune une épaisseur comprise entre 0,1 et 3, de préférence 0,5 et 1,2 mm, collées l'une à l'autre par une première couche adhésive intercalaire d'épaisseur comprise entre 50 µm et 2 mm, de préférence 250 µm et 1,3 mm, et la dalle extérieure est constituée d'une seule feuille de matériau polymère transparent structural d'épaisseur comprise entre 3 et 100, de préférence 6 et 15 mm ou d'une quatrième feuille de verre extérieure d'épaisseur comprise entre 0,2 et 2,6, de préférence 1,6 et 2,4 mm, collée à une cinquième feuille de verre intérieure d'épaisseur comprise entre 0,2 et 2,1, de préférence entre 0,4 et 1,9 mm, au moyen d'une troisième couche adhésive intercalaire.

Au sens de l'invention, les termes « intérieur » et « extérieur » se réfèrent au volume intérieur de l'aéronef et à l'atmosphère extérieure. Le hublot peut être bombé, et tout homme du métier reconnaît au moins à la forme du joint de montage la face du hublot destinée à être en contact avec l'atmosphère extérieure et la face du hublot destinée à être en contact avec le volume intérieur de l'aéronef.

D'autre part, on entend par « feuille de matériau polymère transparent structural » une feuille susceptible de constituer à elle seule un vitrage monolithique, d'en assurer la résistance mécanique, en particulier, et ayant un module élastique au moins égal à 1500 MPa par exemple, au contraire d'une couche adhésive intercalaire, par exemple.

De préférence, le hublot comprend une couche ou un empilement de couches antisolaire, bas-émissi(ve)(f), une antenne WiFi, un revêtement chauffant / désembuant, un blindage électromagnétique et/ou un écran et/ou affichage.

La fonction antisolaire consiste à réfléchir le rayonnement solaire pour limiter l'échauffement à l'intérieur du véhicule ; on peut citer un empilement bicouche argent ou tricouche argent. La fonction bas-émissive consiste à réfléchir certains rayonnements infra-rouge pour garder la chaleur à l'intérieur du véhicule, limitant le ressenti de froid lorsque la tête d'un passager, notamment, s'approche de la face intérieure du hublot, en vol. La fonction antisolaire et la fonction bas-émissive sont des fonctions de contrôle thermique.

Une antenne WiFi peut être gravée dans une couche électroconductrice, ou à fil électroconducteur notamment inséré dans une couche adhésive intercalaire.

Un revêtement chauffant / désembuant est un revêtement électroconducteur chauffant, tel qu'en oxyde conducteur transparent (en anglais « Transparent Conductive Oxide » - TCO -) du type oxyde d'indium dopé à l'étain (en anglais Indium Tin Oxide - ITO -), ou SnO₂ :F. Le revêtement chauffant / désembuant est nécessairement proche, dans l'épaisseur de la structure du hublot, de la face intérieure de celui-ci sur laquelle la buée est susceptible de se former, pour pouvoir supprimer cette buée par chauffage.

Un blindage électromagnétique est un écran vis-à-vis des ondes électromagnétiques, empêchant celles-ci d'entrer dans et de sortir de l'aéronef. On l'appelle également « blindage IEM » (Impulsion Electro-Magnétique). Si la couche constituant un blindage IEM se situe en face intérieure de la dalle extérieure ou en face intérieure ou extérieure de la dalle intérieure, le joint de montage sera nécessairement conducteur et au contact électriquement conducteur de la structure de l'aéronef (carlingue...).

Un écran et un affichage se réfèrent ici à l'affichage d'informations relatives au vol, ou générales, voire d'images animées, vidéos... Les moyens et structures techniques peuvent en être similaires à ceux d'un affichage tête haute (en anglais Head Up Display - HUD -) sur un pare-brise automobile, ou d'un écran de télévision.

Selon une caractéristique avantageuse, la face extérieure de la dalle extérieure est revêtue d'une couche hydrophobe ou hydrophile, et/ou la face intérieure de la dalle intérieure est revêtue d'une couche hydrophile. La fonction hydrophobe d'une surface est réalisée par son angle de contact élevé au liquide, notamment à l'eau, par exemple au moins égal à 90 °, qui se manifeste par un glissement de l'eau sous forme de gouttes, sous leur propre poids ou bien sous l'effet aérodynamique résultant de la vitesse de l'aéronef. Des agents hydrophobes bien connus sont par exemple des silanes fluorés. La fonction hydrophile au contraire, est réalisée par une surface d'angle de contact à l'eau faible, inférieur à 90 °, voire au plus égal à 20 °. Au lieu de se fragmenter en gouttes, l'eau forme au contraire un film uniforme transparent. Une telle surface empêche notamment la formation de buée gênant la vision à travers un vitrage. (La buée peut se former sur la surface froide d'un vitrage en contact avec un volume relativement chaud tel que l'intérieur d'un véhicule.) Des agents hydrophiles connus sont la silice, le dioxyde de titane photocatalytique (cristallisé sous forme rutile), des polymères hydrophiles tels que poly(alcool vinylique) (PVAL), polyéthylène glycol (PEG), acryliques tels que polyacrylamide (PAM), polyvinylpyrrolidone (PVP)...

Dans une réalisation préférée, l'une au moins des deux faces de l'une au moins des première feuille de verre extérieure et seconde feuille de verre intérieure, de préférence la face intérieure de la première feuille de verre extérieure et/ou la face extérieure de la seconde feuille de verre intérieure, est (sont) revêtue(s) d'une couche ou d'un empilement de couches de contrôle thermique.

Dans une réalisation préférée, la feuille de matériau polymère transparent structural est constituée d'un matériau à propriété de contrôle thermique, notamment antisolaire.

Dans une autre réalisation préférée, la première couche adhésive intercalaire est constituée d'un matériau à propriété de contrôle thermique et/ou un film à propriété de contrôle thermique est inséré dans la première couche adhésive intercalaire. Chacun de ces films comprend des molécules et/ou particules absorbant et/ou réfléchissant le rayonnement infrarouge et/ou une superposition de couches constituant un miroir de Bragg. La base du film (partie du film supportant la fonction de contrôle thermique) peut être constituée de poly(téréphtalate d'éthylène) (PET) ou équivalent. Un exemple de film de contrôle thermique transparent est commercialisé par la Société 3M sous la dénomination commerciale « Ultra-Clear Solar Film » (UCSF), qui est un film multi-couche réfléchissant le rayonnement (énergie) solaire sans affecter la transmission de lumière visible. Ce film, neutre en couleur, peut être en sandwich entre deux couches adhésives intercalaires telles que PVB, EVA, TPU, résine ionomère telle que SentryGlas^{®} commercialisée par la Société Kuraray, résine intercalaire coulée.

Si la couche, l'empilement de couches, le matériau ou le film de contrôle thermique est sur la dalle intérieure ( première feuille de verre extérieure, seconde feuille de verre intérieure, première couche adhésive intercalaire ) il s'agit plutôt d'une couche, d'un empilement, matériau ou film bas-émissif limitant notamment la sensation de froid lorsque la tête d'un occupant - passager s'approche de la face intérieure du hublot, tandis que si la couche, l'empilement de couches, le matériau ou le film de contrôle thermique est sur la dalle extérieure ( première feuille de matériau polymère transparent structural extérieure, troisième feuille de verre intérieure, seconde couche adhésive intercalaire), il s'agit plutôt d'une couche, d'un empilement, matériau ou film antisolaire.

De préférence, chaque feuille de verre est en verre sodocalcique, aluminosilicate, borosilicate ou équivalent, éventuellement durci, trempé thermiquement et de préférence renforcé chimiquement.

De préférence, chaque feuille de matériau polymère transparent structural comprend un poly(méthacrylate de méthyle) (PMMA), un polycarbonate (PC), un polyurée/uréthane tel que commercialisé par la Société PPG sous la marque Opticor^{®} ou sous la référence PSS-1000, ou tout matériau polymère transparent ayant un module d'Young au moins égal à 1500 MPa, seuls ou en mélanges ou copolymères de plusieurs d'entre eux.

De préférence, chaque couche adhésive intercalaire est choisie parmi un polyvinylbutyral (PVB), éventuellement à propriété d'amortissement acoustique, un polyuréthane thermoplastique (TPU), un copolymère éthylène - acétate de vinyle (EVA), un verre ionomère ou une résine intercalaire coulée.

De préférence, le joint de montage est percé d'un canal mettant en communication l'atmosphère intérieure de l'aéronef avec la lame d'air. Cette mesure vise à égaliser la pression d'air entre la cabine de l'aéronef et la lame d'air du hublot, particulièrement lorsque la cabine est pressurisée. Du fait que la dalle intérieure est en verre feuilleté, il est préférable de ne pas y percer le canal traversant, au contraire de la dalle intérieure en PMMA monolithique classique.

L'invention est illustrée par les dessins en annexe dans lesquels
[Fig. 1] est une vue schématique en coupe d'un hublot de l'état de la technique.
[Fig. 2] est une représentation schématique en coupe d'un premier mode de réalisation principal du hublot de l'invention.
[Fig. 3], [Fig. 4], [Fig.5] et [Fig. 6] représentent quatre variantes du premier mode de réalisation principal de la figure 2 dans lesquelles les feuilles de verre de la dalle intérieure sont revêtues d'une couche ou d'un empilement de couches de contrôle thermique.
[Fig. 7], [Fig. 8] et [Fig. 9] représentent schématiquement en coupe trois variantes du premier mode de réalisation principal de la figure 2 dans lesquelles la fonction de contrôle thermique est comprise dans la couche adhésive intercalaire de la dalle intérieure.
[Fig. 10] est une représentation schématique en coupe d'un hublot qui ne s'inscrit pas dans le cadre de l'invention.

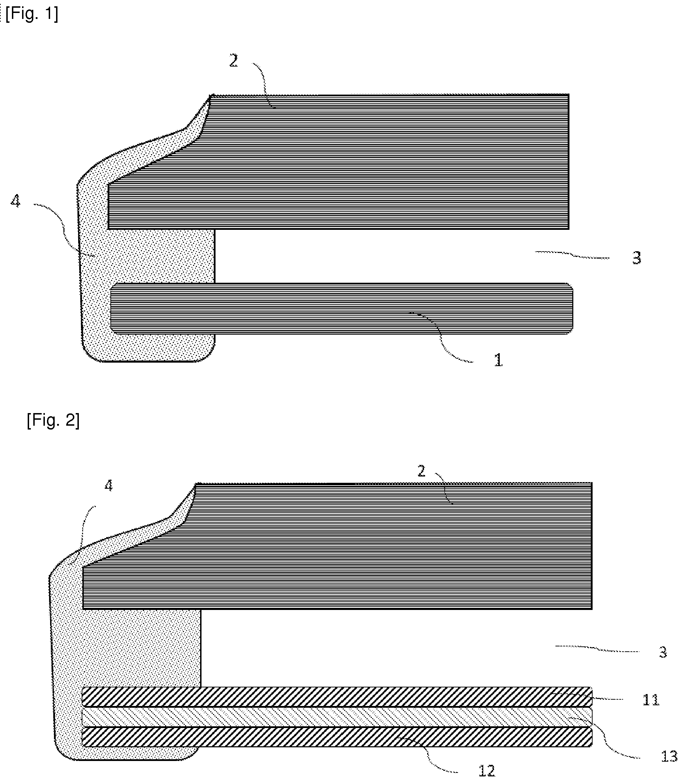

Sur la figure 1, un hublot classique comprend une dalle intérieure 1 et une dalle extérieure 2 monolithiques en PMMA, dont une partie périphérique est enchâssée dans un joint de montage 4 en silicone ou similaire, qui les maintient parallèles à une certaine distance l'une de l'autre, définissant une lame d'air 3.

Conformément à l'invention, le hublot de la figure 2 diffère de celui de la figure 1 par la dalle intérieure constituée de deux feuilles de verre 11 et 12 de 0,55 mm d'épaisseur collées par une couche 13 de 0,76 mm de PVB. La rigidité ou raideur M (Nmm) de ce vitrage feuilleté est légèrement supérieure à celle d'une dalle monolithique de PMMA de 4 mm d'épaisseur. Chaque feuille de verre est en verre sodocalcique, aluminosilicate ou borosilicate, et renforcé chimiquement. La masse surfacique de la dalle intérieure en verre feuilleté est de 3,6 kg / m², inférieure à celle d'une dalle monolithique en PMMA de 4 mm d'épaisseur (4,8 kg / m²). Le joint de montage 4 comprend un trou d'égalisation de pression (non représenté) de part et d'autre de la dalle intérieure feuilletée.

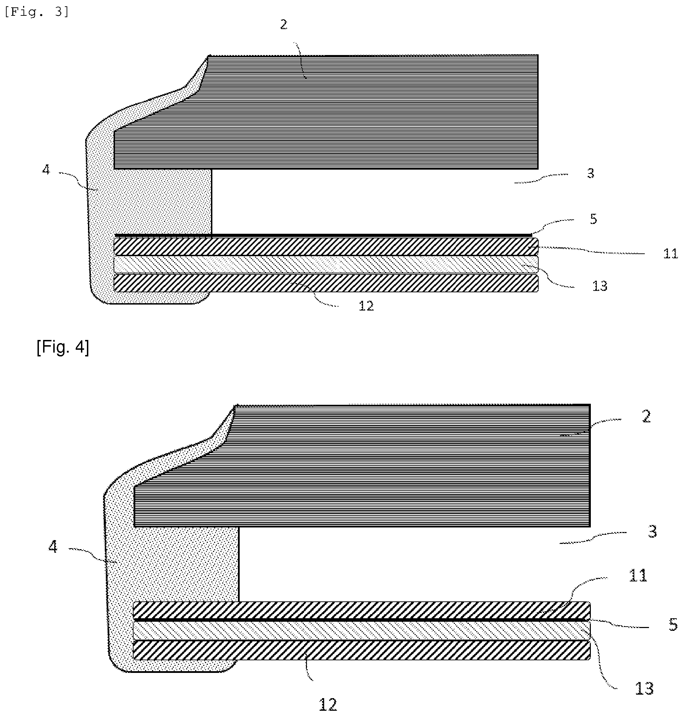

Sur la figure 3, une couche ou un empilement de couches bas-émissi(ve)(f) 5 revêt la face extérieure de la feuille de verre 11 extérieure de la dalle intérieure, de manière à garder la chaleur à l'intérieur de l'aéronef.

Sur la figure 4, une couche ou un empilement de couches bas-émissi(ve)(f) 5 revêt la face intérieure de la feuille de verre 11 extérieure de la dalle intérieure.

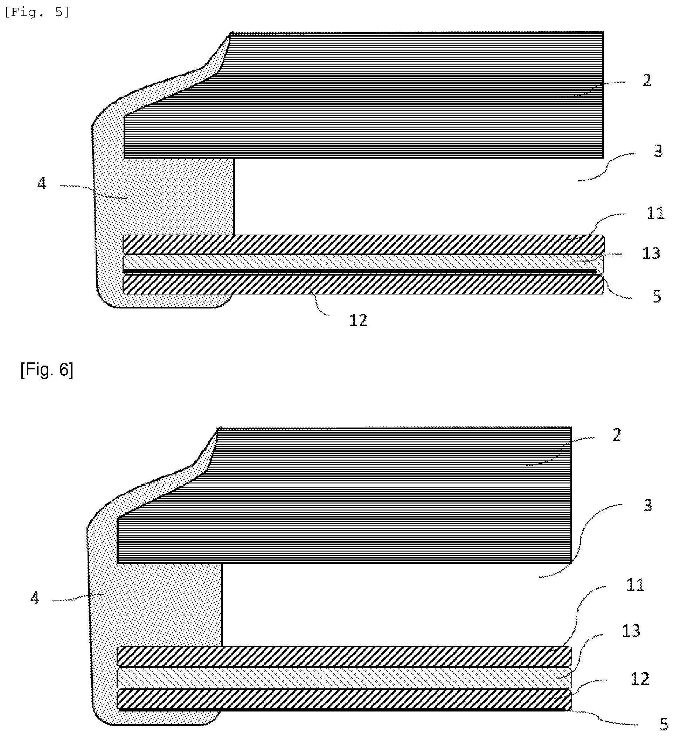

Sur la figure 5, une couche ou un empilement de couches bas-émissi(ve)(f) 5 revêt la face extérieure de la feuille de verre 12 intérieure de la dalle intérieure.

Sur la figure 6, une couche ou un empilement de couches bas-émissi(ve)(f) 5 revêt la face intérieure de la feuille de verre 12 intérieure de la dalle intérieure.

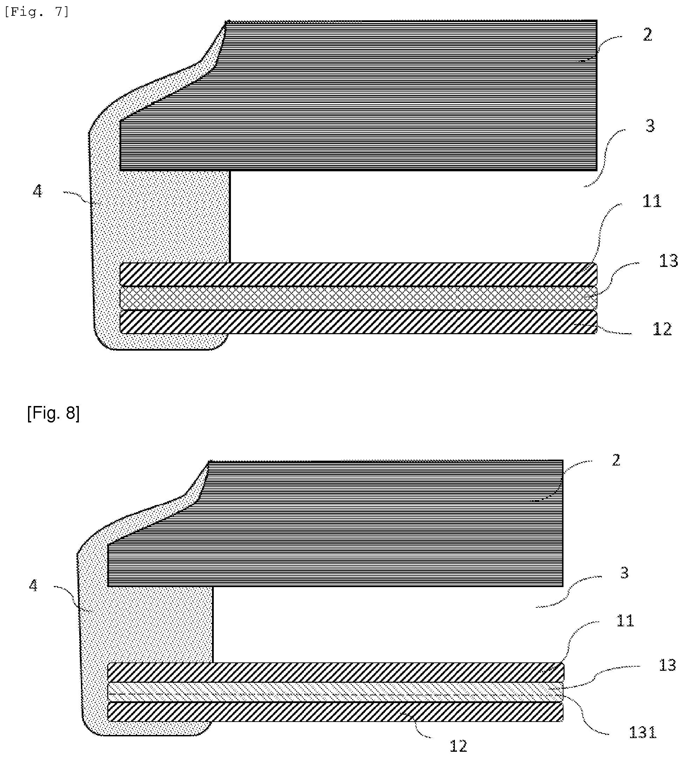

Sur la figure 7, la fonction bas-émissive est procurée par la nature de la couche adhésive 13 (PVB ou autre) qui comprend des particules réfléchissant l'infrarouge.

Sur la figure 8, la fonction bas émissive est procurée par l'insertion dans la couche adhésive 13 (PVB ou autre) d'un film 131 de PET supportant une couche ou un empilement de couches bas-émissi(ve)(f) ou un miroir de Bragg sur une de ses faces ou sur les deux.

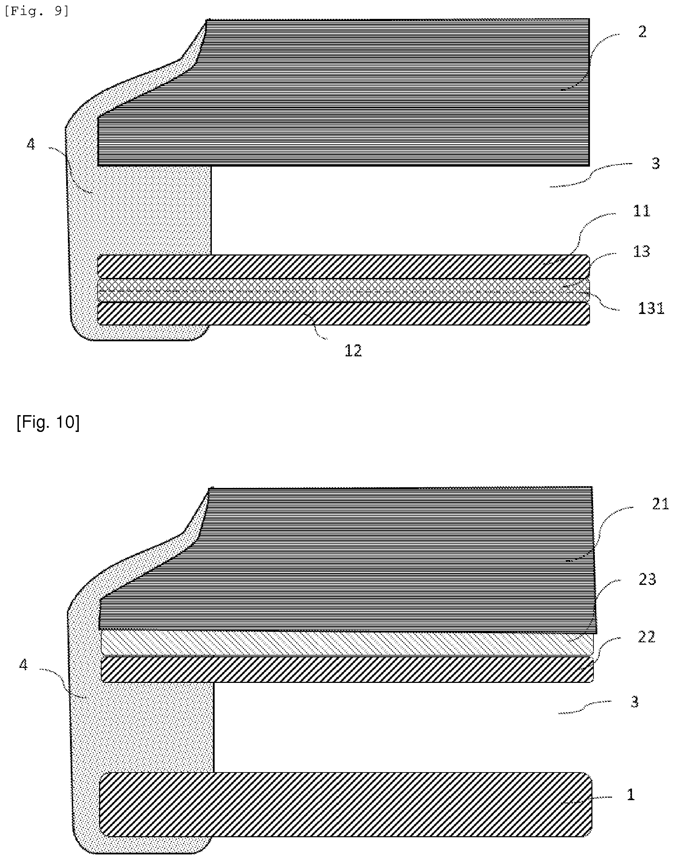

La figure 9 représente un hublot dans lequel les moyens bas-émissifs des figures 7 et 8 sont présents cumulativement.

Conformément au hublot représenté en figure 10, la dalle extérieure est constituée d'une feuille 21 de PMMA aminci de moins de 12 à 4 mm d'épaisseur collée à une feuille de verre renforcé chimiquement 22 de 2,7 mm d'épaisseur au moyen d'une couche de 0,76 mm d'épaisseur d'intercalaire de feuilletage 23 (TPU ou autre). Pour cet exemple précis, d'autres épaisseurs du couple verre/PMMA sont possibles resp (2.7/4 ;2/5.75 ;1.5 /7.3 ;1.2/8.25 ;1/8.9 ;0.7/10 ;0.5/10.7) mm, mais avec des gains de masse par rapport à la dalle de PMMA monolithique de 12 mm décroissants. Le gain de masse à raideur équivalente est plus important lorsque l'épaisseur de verre est plus importante. La dalle intérieure est constituée d'une feuille de PMMA monolithique 1 de 3 à 6 mm d'épaisseur. Une couche ou un empilement de couches antisolaire non représenté(e) est susceptible de revêtir la face intérieure de la feuille de PMMA 21, ou la face extérieure ou la face intérieure de la feuille de verre 22. La fonction antisolaire peut d'autre part être réalisée par la couche de TPU 23, à l'instar de la fonction bas-émissive par la couche de PVB 13 décrite précédemment (nature du matériau adhésif intercalaire dans lequel sont insérées des particules par exemple, insertion d'un film PET supportant une couche ou un empilement de couches antisolaire).

## Revendications

1. Hublot d'aéronef composé d'une dalle intérieure (1) et d'une dalle extérieure (2) séparées par une lame d'air (3) au moyen d'un joint de montage (4) dans lequel une partie périphérique du hublot est enchâssée, **caractérisé en ce que** la dalle intérieure (1) est constituée d'une première feuille de verre (11) extérieure et d'une seconde feuille de verre (12) intérieure ayant chacune une épaisseur comprise entre 0,1 et 3, de préférence 0,5 et 1,2 mm, collées l'une à l'autre par une première couche adhésive intercalaire (13) d'épaisseur comprise entre 50 µm et 2 mm, de préférence 250 µm et 1,3 mm, et,
la dalle extérieure (2) est constituée d'une seule feuille de matériau polymère transparent structural (2) d'épaisseur comprise entre 3 et 100, de préférence 6 et 15 mm, ou
d'une quatrième feuille de verre (24) extérieure d'épaisseur comprise entre 0,2 et 2,6, de préférence 1,6 et 2,4 mm, collée à une cinquième feuille de verre (25) intérieure d'épaisseur comprise entre 0,2 et 2,1, de préférence entre 0,4 et 1,9 mm, au moyen d'une troisième couche adhésive intercalaire (26).

2. Hublot selon la revendication 1, **caractérisé en ce qu'**il comprend une couche ou un empilement de couches antisolaire, bas-émissi(ve)(f), une antenne WiFi, un revêtement chauffant / désembuant, un blindage électromagnétique et/ou un écran et/ou affichage.

3. Hublot selon la revendication 1, **caractérisé en ce que** la face extérieure de la dalle extérieure (2) est revêtue d'une couche hydrophobe ou hydrophile, et/ou la face intérieure de la dalle intérieure (1) est revêtue d'une couche hydrophile.

4. Hublot selon la revendication 1, **caractérisé en ce que** l'une au moins des deux faces de l'une au moins des première feuille de verre (11) extérieure et seconde feuille de verre (12) intérieure, de préférence la face intérieure de la première feuille de verre (11) extérieure et/ou la face extérieure de la seconde feuille de verre (12) intérieure, est (sont) revêtue(s) d'une couche ou d'un empilement de couches de contrôle thermique (5).

5. Hublot selon la revendication 1, **caractérisé en ce que** la feuille de matériau polymère transparent structural ( 2) est constituée d'un matériau à propriété de contrôle thermique.

6. Hublot selon la revendication 1, **caractérisé en ce que** la première couche adhésive intercalaire (13) est constituée d'un matériau à propriété de contrôle thermique et/ou un film (131) à propriété de contrôle thermique est inséré dans la première couche adhésive intercalaire (13).

7. Hublot selon la revendication 6, **caractérisé en ce que** chaque film (131) comprend des molécules et/ou particules absorbant et/ou réfléchissant le rayonnement infrarouge et/ou une superposition de couches constituant un miroir de Bragg.

8. Hublot selon la revendication 1, **caractérisé en ce que** chaque feuille de verre (11, 12, 24, 25) est en verre sodocalcique, aluminosilicate, borosilicate ou équivalent, éventuellement durci, trempé thermiquement et de préférence renforcé chimiquement.

9. Hublot selon la revendication 1, **caractérisé en ce que** chaque feuille de matériau polymère transparent structural (21) comprend un poly(méthacrylate de méthyle) (PMMA), un polycarbonate (PC), un polyurée/uréthane, ou tout matériau polymère transparent ayant un module d'Young au moins égal à 1500 MPa, seuls ou en mélanges ou copolymères de plusieurs d'entre eux.

10. Hublot selon la revendication 1, **caractérisé en ce que** chaque couche adhésive intercalaire (13, 26) est choisie parmi un polyvinylbutyral (PVB), éventuellement à propriété d'amortissement acoustique, un polyuréthane thermoplastique (TPU), un copolymère éthylène - acétate de vinyle (EVA), un verre ionomère ou une résine intercalaire coulée.

11. Hublot selon la revendication 1, **caractérisé en ce que** le joint de montage (4) est percé d'un canal mettant en communication l'atmosphère intérieure de l'aéronef avec la lame d'air (3).

## Patentansprüche

1. Bullauge für ein Luftfahrzeug, bestehend aus einer Innenplatte (1) und einer Außenplatte (2), die durch einen Luftspalt (3) mittels einer Montagefuge (4) getrennt sind, in die ein Umfangsteil des Bullauges eingelassen ist,
**dadurch gekennzeichnet, dass** die Innenplatte (1) aus einer ersten äußeren Glasscheibe (11) und einer zweiten inneren Glasscheibe (12) gebildet ist, die jeweils eine Dicke zwischen 0,1 und 3, vorzugsweise 0,5 und 1,2 mm besitzen, die durch eine erste Zwischenlagenhaftschicht (13) mit einer Dicke zwischen 50 µm und 2 mm, vorzugsweise 250 µm und 1,3 mm, miteinander verklebt sind, und
die Außenplatte (2) aus einer einzigen Scheibe aus strukturellem transparentem Polymermaterial (2) mit einer Dicke zwischen 3 und 100, vorzugsweise 6 und 15 mm gebildet ist, oder
aus einer vierten äußeren Glasscheibe (24) mit einer Dicke zwischen 0,2 und 2,6, vorzugsweise zwischen 1,6 und 2,4 mm, die mittels einer dritten Zwischenlagenhaftschicht (26) mit einer fünften inneren Glasscheibe (25) mit einer Dicke zwischen 0,2 und 2,1, vorzugsweise zwischen 0,4 und 1,9 mm verklebt ist.

2. Bullauge nach Anspruch 1, **dadurch gekennzeichnet, dass** es eine(n) sonnenblockierende(n) Schicht oder Schichtstapel mit geringer Emissivität, eine WLAN-Antenne, eine Heiz-/Antibeschlagbeschichtung, eine elektromagnetische Abschirmung und/oder einen Bildschirm und/oder eine Anzeige umfasst.

3. Bullauge nach Anspruch 1, **dadurch gekennzeichnet, dass** die Außenoberfläche der Außenplatte (2) mit einer hydrophoben oder hydrophilen Schicht beschichtet ist und/oder die Innenoberfläche der Innenplatte (1) mit einer hydrophilen Schicht beschichtet ist.

4. Bullauge nach Anspruch 1, **dadurch gekennzeichnet, dass** mindestens eine der zwei Flächen mindestens einer der ersten äußeren Glasscheibe (11) und der zweiten inneren Glasscheibe (12), vorzugsweise die Innenoberfläche der ersten äußeren Glasscheibe (11) und/oder die Außenoberfläche der zweiten inneren Glasscheibe (12), mit einer Schicht oder einem Schichtstapel (5) für eine Wärmeregelung beschichtet ist/sind.

5. Bullauge nach Anspruch 1, **dadurch gekennzeichnet, dass** die Scheibe aus strukturellem transparentem Polymermaterial (2) aus einem Material mit wärmeregulierenden Eigenschaften gebildet ist.

6. Bullauge nach Anspruch 1, **dadurch gekennzeichnet, dass** die erste Zwischenlagenhaftschicht (13) aus einem Material mit wärmeregulierenden Eigenschaften gebildet ist und/oder eine Folie (131) mit wärmeregulierenden Eigenschaften in die erste Zwischenlagenhaftschicht (13) eingefügt ist.

7. Bullauge nach Anspruch 6, **dadurch gekennzeichnet, dass** jede Folie (131) Moleküle und/oder Partikel, die Infrarotstrahlung absorbieren und/oder reflektieren, und/oder eine Überlagerung von Schichten umfasst, die einen Bragg-Spiegel bilden.

8. Bullauge nach Anspruch 1, **dadurch gekennzeichnet, dass** jede Glasscheibe (11, 12, 24, 25) aus Kalknatronglas, Alumosilikat, Borosilikat oder einem Äquivalent, gegebenenfalls gehärtet, thermisch vorgespannt und vorzugsweise chemisch verstärkt, hergestellt ist.

9. Bullauge nach Anspruch 1, **dadurch gekennzeichnet, dass** jede Scheibe aus strukturellem transparentem Polymermaterial (21) Polymethylmethacrylat (PMMA), Polycarbonat (PC), Polyharnstoff/Urethan oder ein beliebiges transparentes Polymermaterial, das einen Elastizitätsmodul von mindestens 1500 MPa besitzt, allein oder in Mischungen oder Copolymeren mehrerer davon umfasst.

10. Bullauge nach Anspruch 1, **dadurch gekennzeichnet, dass** jede Zwischenlagenhaftschicht (13, 26) aus Polyvinylbutyral (PVB), optional mit Eigenschaften für eine akustische Dämpfung, thermoplastischem Polyurethan (TPU), Ethylen-Vinylacetat-Copolymer (EVA), einem Glasionomer oder einem gegossenen Zwischenlagenharz ausgewählt ist.

11. Bullauge nach Anspruch 1, **dadurch gekennzeichnet, dass** die Montagefuge (4) mit einem Kanal durchbohrt ist, der die Innenatmosphäre des Luftfahrzeugs mit dem Luftspalt (3) verbindet.

## Claims

1. An aircraft window composed of an inner panel (1) and an outer panel (2) which are separated by a layer of air (3) by means of an installation seal (4) into which a peripheral portion of the window is set, **characterized in that** the inner panel (1) consists of a first, outer pane of glass (11) and a second, inner pane of glass (12), each having a thickness from 0.1 mm to 3 mm, preferably from 0.5 mm to 1.2 mm, and being bonded to one another by a first adhesive interlayer (13) with a thickness from 50 µm to 2 mm, preferably from 250 µm to 1.3 mm, and the outer panel (2) consists of a single sheet of transparent structural polymer material (2) with a thickness from 3 mm to 100 mm, preferably from 6 mm to 15 mm, or
of a fourth outer pane of glass (24) with a thickness from 0.2 mm to 2.6 mm, preferably from 1.6 mm to 2.4 mm, bonded to a fifth inner pane of glass (25) with a thickness from 0.2 mm to 2.1 mm, preferably from 0.4 mm to 1.9 mm, by means of a third adhesive interlayer (26).

2. The window according to claim 1, **characterized in that** it comprises a layer or a stack of layers for sun protection, low emissivity, a WiFi antenna, a heating/defogging coating, an electromagnetic shield and/or a screen and/or display.

3. The window according to claim 1, **characterized in that** the outer face of the outer panel (2) is coated with a hydrophobic or hydrophilic layer, and/or the inner face of the inner panel (1) is coated with a hydrophilic layer.

4. The window according to claim 1, **characterized in that** at least one of the two faces of at least one of the first outer pane of glass (11) and the second inner pane of glass (12), preferably the inner face of the first outer pane of glass (11) and/or the outer face of the second inner pane of glass (12), is (are) coated with a thermal control layer or a stack of thermal control layers (5).

5. The window according to claim 1, **characterized in that** the sheet of transparent structural polymer material ( 2) consist(s) of a material with a thermal control property.

6. The window according to claim 1, **characterized in that** the first adhesive interlayer (13) consists of a material with a thermal control property and/or a film (131) with a thermal control property is inserted into the first adhesive interlayer (13).

7. The window according to claim 6, **characterized in that** each film (131) comprises molecules and/or particles absorbing and/or reflecting the infrared radiation and/or a superposition of layers constituting a Bragg mirror.

8. The window according to claim 1, **characterized in that** each pane of glass (11, 12, 24, 25) is made of soda-lime glass, aluminosilicate, borosilicate or equivalent, optionally hardened, thermally tempered and preferably chemically reinforced.

9. The window according to claim 1, **characterized in that** each sheet of transparent structural polymer material (2, 1) comprises a poly(methyl methacrylate) (PMMA), a polycarbonate (PC), a polyurea/urethane, or any transparent polymer material having a Young's modulus at least equal to 1500 MPa, alone or as mixtures or copolymers of several of them.

10. The window according to claim 1, **characterized in that** each adhesive interlayer (13, 26) is chosen from a polyvinyl butyral (PVB), optionally with an acoustic damping property, a thermoplastic polyurethane (TPU), an ethylene-vinyl acetate copolymer (EVA), an ionomer glass or a cast interlayer resin.

11. The window according to claim 1, **characterized in that** the installation seal (4) is pierced by a channel placing the inside atmosphere of the aircraft in communication with the layer of air (3).
